# EUROPEAN PATENT APPLICATION

(11) **EP 4 276 666 A1**
(43) Date of publication of application: **15.11.2023**
(21) Application number: 22173083.1
(22) Date of filing: 12.05.2022
(51) Int. Cl.: G06F 21/57, G06F 21/73, G06F 21/75, G06F 21/76, G06N 20/00

(54) **METHOD AND DEVICE FOR SECURE SWARM LEARNING**

(71) Applicant: Deutsches Zentrum für Neurodegenerative Erkrankungen e.V. (DZNE), 53127 Bonn (DE)
(72) Inventor: Schultze, Joachim, 53639 Königswinter (DE); Schultze, Hartmut, 40878 Ratingen (DE)
(74) Representative: Hofmann, Matthias

(57) **Abstract**

The present invention provides a device for decentralized machine learning, the device comprising: an access control unit for controlling an access of a remote device to the device, a hardware security gate for checking a hardware integrity of the device, and a quality filter unit for filtering data provided for decentralized machine learning, wherein the access control unit and the quality filter unit are implemented on an FPGA.

## Description

### Field of the Invention

The present invention is in the field of machine learning applications. In particular, the invention relates to a device for secure decentralized machine learning.

### Background

The development of medical science has resulted in a boom in the quality, quantity, size and the number of categories of medical data. To conduct a Medical Diagnostic and/or Predictive Test (MDPT) more efficiently and more precisely, artificial intelligence technology, especially deep learning models are promising, often essential. However, training e.g. deep learning models for conducting a MDPT inevitably requires large amounts of private medical information of individuals, which can carry risks for confidentiality and security of such medical data. In order to protect privacy, this private data is often not available for training for deep learning models which significantly reduces training data size and thus having a negative impact on the accuracy of MDPT. Swarm learning is a promising decentralized machine learning model which not only maintains high efficiency and precision but also guarantees by design a high standard protection of confidential data used for the training. In a swarm learning model, data owners (e.g. hospitals, medical device companies) no longer need to share confidential private data with the AI model owner (e.g. research institutions, AI companies) for training. Instead, training is conducted on local nodes, and is coordinated by a blockchain platform.

However, although swarm learning can use blockchains to ensure data security on the interface layer, the physical distribution of participant nodes increases the exposure of the swarm learning system to a malicious third-party attack on the physical or application layer, therefore potentially threatening the security of both local confidential data and of the remote AI model.

Thus, there is a need for designing a device for a participant node in a swarm learning network that ensures the data and the AI model's security while still maintaining the high performance of a swarm learning model.

### Summary of the invention

The object of the present invention is to provide a device, a method, and a computer product for a participant node in a decentralized machine learning network that solve one or more of the above-mentioned problems of the prior art. The present invention is defined by the appended claims.

A first aspect of the invention provides a device for secure decentralized machine learning, wherein the device comprises:
- an access control unit for controlling access of remote swarm devices to the device,
- a hardware security gate for checking a hardware integrity of the device, and
- a quality filter unit for filtering data provided to the decentralized machine learning, wherein the access control unit, and the quality filter unit are implemented on an FPGA.

By providing the essential safety units on the FPGA, the invention facilitates a minimum exposure of the device to malicious modification e.g. by third-party attackers. Specifically, the access control unit, which prevents unauthorized access to the data processed by the device and the quality filter unit and which makes sure that only data are provided to the training with sufficient quality, are implemented on an FPGA. The FPGA thus presents a computationally efficient, yet well protected "core" of the device for decentralized machine learning.

Protecting network devices against tampering is often a tradeoff between flexibility (e.g. the possibility to provide updates to the software of the device) and security (making sure that the device cannot be modified in a malicious way). Experience shows that tampering of FPGAs is much more difficult than with standard software running on a microprocessor. Specifically, modifying the FPGA configuration would typically require modifying the bitstream of the FPGA. Modifying the bitstream of the FPGA on the other hand requires a knowledge of the specific FPGA hardware details that the attacker often does not have. Furthermore, the hardware security gate can be used to protect the device against physical attacks and against malicious rewriting of the bitstream.

Preferably, the quality filter unit filters data provided to the current device.

Preferably, the decentralized machine learning is implemented via swarm learning.

Optionally, the access control unit and the hardware security gate are implemented on the FPGA whereas other units, e.g. one or more units which perform the machine learning are not implemented on the FPGA.

In a first implementation of the method of the first aspect, the access control unit, the hardware security gate, and the quality filter unit are encapsulated in a hard IP core of the FPGA.

This further protects the access control unit, the hardware security gate, and the quality filter unit from attacks.

In a further implementation of the device of the first aspect, the access control unit, the hardware security gate, and the quality filter unit are encapsulated in a hard IP core of the FPGA.

This further protects the access control unit, the hardware security gate, and the quality filter unit from attacks.

Preferably, the hardware security gate (which may include hardware registration) controls access at the hardware level. The access control unit controls the process of access via the consumed identities. These two levels are deliberately separated so that the respective lifecycle can run asynchronously. For each access, all three conditions must be fulfilled so that the training or inference can be performed.

In a further implementation of the device of the first aspect, the access control unit comprises a physical unclonable function, PUF, to generate an identifier of the FPGA, wherein the identifier is used for an identity verification between the device and a remote swarm device.

This has the advantage that the FPGA facilitates the use of a PUF to provide a secured generation of the FPGA's identifier.

In a further implementation of the device of the first aspect, the hardware security gate is configured to monitor a working condition of the device by monitoring physical attributes of the FPGA, preferably through a differential power analysis, DPA, wherein the hardware security gate is configured to disable an application loaded on the FPGA if an anomaly is detected.

The hardware security gate increases the security of FPGA based physical attributes instead of conventional digital information. In particular, DPAs have been conventionally used by side channel attackers, but have not been used by the defender, as is introduced here. Thus, an overall security of the device is improved.

In a further implementation of the device of the first aspect, the quality filter unit is connected to an agreement unit that is external to the FPGA, wherein the external agreement unit is configured to define and store a smart contract, wherein the quality filter unit is configured to retrieve one or more criteria and/or functions from the smart contract, wherein the one or more criteria and/or functions are used to filter the data provided for decentralized machine learning.

Retrieving data filtering criteria externally avoids exposing sensitive information on the FPGA, reducing security hazard. Further, since the criteria are necessary for filtering data, the attacker cannot attack the data directory even if they managed to hack the FPGA.

In a further implementation of the device of the first aspect, the device further comprises a pre-processing unit for pre-processing the data provided for decentralized machine learning according to the smart contract, in particular to generate metadata, wherein the metadata are stored in a descriptor of the data provided for decentralized machine learning, and the pre-processed data provided for decentralized machine learning are stored in an external data directory.

Pre-processing data guarantees that all data fed to the decentralized machine learning fulfil the privacy restriction, thus also increasing a data volume that can be selected for the decentralized machine learning. Storing pre-processed data externally in a read-only data directory further improves security.

The external directory may be configured as read-only for the FPGA or as read-only for components of the FPGA, i.e., writing to the external directory can be limited, which further improves security.

In a further implementation of the device of the first aspect, the pre-processing unit is configured to retrieve a pointer of a pre-processing pipeline from one or more preregistered pre-processing pipelines from the smart contract based on a class of the data provided for decentralized machine learning.

Pre-processing of data is defined in the external agreement unit. This has the advantage that attackers cannot acquire such information locally, therefore, conducting decentralized machine learning with the pre-processed data stored in the local directory is safe.

In a further implementation of the device of the first aspect, the device is configured such that when a set of data provided for decentralized machine learning comprises one or more data that are classified as sensitive data, in particular using a sensitivity data flag, and the quality filter unit cannot retrieve a de-identification function as defined in the smart contract, the set of data provided is excluded from decentralized machine learning.

This ensures that confidential information (such as PII data) is not processed without de-identification. Information for checking de-identification can be stored locally on the FPGA.

In a further implementation of the device of the first aspect, the device further comprises a quality metric unit for generating one or more quality metrics based on the metadata of the data provided for decentralized machine learning. This can be used to evaluate the data provided for decentralized machine learning.

If the "quality metric" is not reached, the dataset is not used, thus this can represent an essential function of data selection besides logging.

Evaluating the selected data facilitates a better version control. This also facilitates an error diagnosis, avoiding e.g. data poisoning attacks.

In a further implementation of the device of the first aspect, the FPGA controls one or more training accelerators, wherein at least one of the one or more training accelerators is configured to accelerate a calculation of a specific data class,
wherein when the device receives an instruction for conducting a training processing, the quality filter unit is configured to retrieve from the smart contract which one of the one or more training accelerators is needed based on the data class of the filtered data provided for decentralized machine learning,
wherein preferably, each training accelerator is configured to accelerate a calculation of a plurality of data classes, and wherein preferably, at least one of the one or more training accelerators further comprises a transformer configured to transform a set of the filtered data provided for decentralized machine learning to a format compatible to the training accelerator based on the data class of the set of filtered data provided for decentralized machine learning.

The systematically selected accelerators can increase the data processing efficiency. Transformers as specified can increase that can be processed by a given accelerator. Thus, an overall processing efficiency is improved.

The one or more training accelerators can be implemented on the FPGA or separately from the FPGA.

In a further implementation of the device of the first aspect, the device further comprises a logging unit, configured to log an information related to the training processing after the instruction for conducting the training processing is received, wherein the information related to the training processing comprises at least one or more of the following:
- an identification of the data provided for decentralized machine learning,
- a pre-processing instance ID for the pre-processing conducted on the data provided for decentralized machine learning,
- a hardware identifier of the FPGA,
- an agreement identifier of the smart contract, and
- an evaluation of the data provided for decentralized machine learning by the quality metric unit

Logging such information can increase the persistence and traceability, which facilitates an overall reliability of the decentralized machine learning network.

In a further implementation of the device of the first aspect, the device further comprises a
user interface configured to receive an input for an inference processing, and
an inference unit for conducting the inference processing,
wherein the device is configured to identify a data class of the input,
wherein the pre-processing unit is configured to pre-process the input based on the data class of the input,
wherein the quality filter unit is configured to retrieve one or more selection criteria and/or functions from the smart contract based on the data class of the input,
wherein the inference processing is not conducted if the input fails to be approved by the one or more selection criteria and/or functions,
and wherein the inference unit is configured to retrieve a decentralized machine learning model defined in the smart contract based on the data class of the input if the input succeeds to be approved by the one or more selection criteria and/or functions.

This ensures that the inference processing is conducted under a secured decentralized machine learning environment.

In a further implementation of the device of the first aspect, the device further comprises a real-world intake connector, configured to receive a real world result corresponding to the input, wherein the real-world result is stored with the corresponding input in the directory, in particular after a pre-processing conducted by the pre-processing unit.

This facilitates a re-training lifecycle based on real-world data.

A second aspect of the present invention provides a method wherein the method comprises:
checking, by a hardware security gate, a hardware integrity of the device by a hardware security gate;
controlling, by an access control unit, an access of a remote swarm device to the device; and filtering, by a quality filter unit, data provided for decentralized machine learning,
wherein the access control unit and the quality filter unit are implemented on an FPGA.

Preferably, the hardware security gate is also implemented on the FPGA.

The method of the second aspect can be performed by the device of the first aspect.

In a further implementation of the method of the second aspect, the controlling the access of a remote swarm device to the device by the access control unit comprises:
checking a registration status of the device on a platform;
receiving an instruction from the platform; and
   attesting an access right of an identity of the device based on the instruction via policies defined in the platform using short-lived certificates.

The platform can comprise or can be implemented as a decentral function for controlling the individual nodes for decentralized machine learning. The platform can comprise one or more servers with a central or decentral controlling function.

In a further implementation of the method of the second aspect, the instruction from the platform is an instruction to conduct a training processing, and the method further comprises configuring a training accelerator based on the instruction.

In a further implementation of the method of the second aspect, the instruction from the platform is an instruction to conduct an inference processing, and the method further comprises:
entering an input for the inference processing;
retrieving a trained decentralized machine learning model from the platform according to the input;
conducting the inference processing with the decentralized machine learning model;
entering the real-world inference result corresponding to the input; and
storing the input with the corresponding real-world inference result in a directory.

Preferably, prior to storing the data provided for decentralized machine learning in the directory, the method further comprises:
determining a class of the data provided for decentralized machine learning;
retrieving a pre-processing pipeline from the platform based on the class of the data provided for decentralized machine learning;
pre-processing the data provided for decentralized machine learning using the pre-processing pipeline to generate metadata; and
storing the metadata in a descriptor of the data provided for decentralized machine learning.

Preferably, the method further comprises: if the checking of the hardware integrity of the device fails, sending a notification to the platform; and disabling one or more applications on the device. Preferably, all applications related to decentralized machine learning (training and/or inference) running on the device are disabled in response to the failed hardware integrity check.

A third aspect of the present invention provides a computer-readable storage medium storing program code, the program code comprising instructions that when executed by a processor carry out the method of the second aspect or one of its implementations.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a schematic illustration of a device for secure decentralized machine learning according to an embodiment,
- FIG. 2: is a flow chart of a method of checking the hardware status of the device for a decentralized machine learning processing according to a further embodiment,
- FIG. 3: is a flow chart of a method of conducting a training processing in accordance with a further embodiment, and
- FIG. 4: is a flow chart of a method of conducting a inference processing in accordance with a further embodiment.

### DETAILED DESCRIPTION OF EXAMPLES

The following descriptions are only implementation manners of the present invention, the scope of the present invention is not limited to this. Any variations or replacements can be easily made through persons skilled in the art. Therefore, the protection scope of the present invention should be subject to the protection scope of the attached claims.

Generating insights or information from sensitive healthcare data must take into consideration the following situations and requirements:
1) healthcare data increase in the quality, quantity, size, and the number of categories
2) the data policy landscape is complex and dynamic and is evolving around health data in particular,
3) data ownership, data sharing, data security, data privacy and data interoperability should be guaranteed for a precision medicine approach,
4) intellectual property rights and ethical considerations need to be respected, and
5) participation in sensitive health data consortia needs to be realized to maximize volumes of data sitting in silos around the globe needed to generate acceptable results.
6) appropriate security measures need to be deployed to the data sources.
7) Medical Devices need to adhere to the International Medical Device Regulators Forum (IMDRF) risk categorization principles.

Distributed hospitals or medical institutions in possession of large amounts of medical data provide a treasure trove of information fragmented in siloes. The medical device diagnostics tests created and delivered using swarm learning make use of machine learning and/or artificial intelligence applications on data and models of decentral and multiple legal entities which adhere to very defined policies regarding the application of the technology. There is a need for secure, efficient and precise MDPT utilizing swarm learning, which makes it possible to fulfil all the above-mentioned requirement with a standard swarm learning hardware implementation.

Functions of the swarm learning described herein can be implemented e.g. as described in Warnat-Herresthal, S., Schultze, H., Shastry, K.L., Manamohan, S., Mukherjee, S., Garg, V., Sarveswara, R., Handler, K., Pickkers, P., Aziz, N.A. and Ktena, S., 2021. Swarm learning for decentralized and confidential clinical machine learning. Nature, 594(7862), pp.265-270.

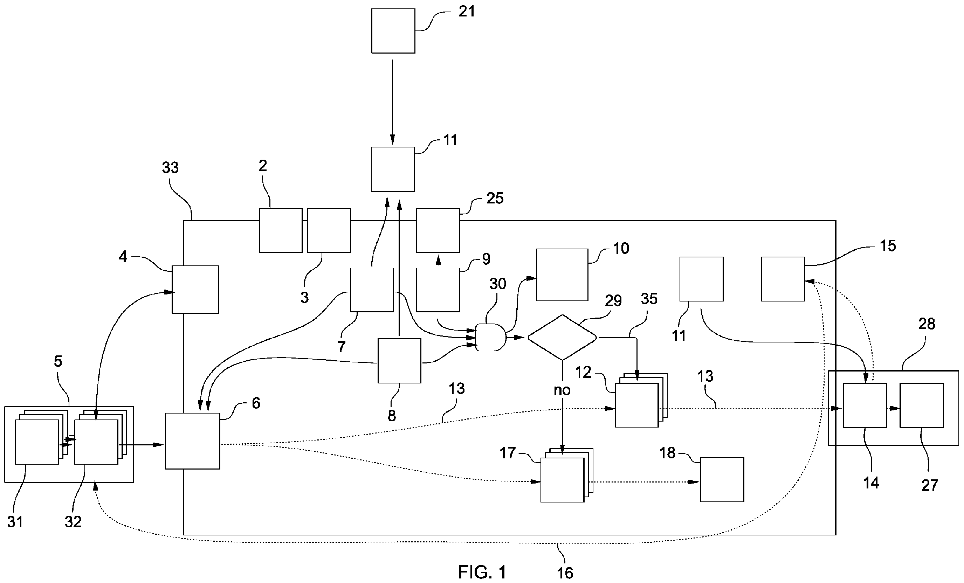

FIG. 1 is a schematic illustration of a device for secure swarm learning according to a first embodiment.

The device provides training for different data classes. The data can be stored in a data directory 5. The data directory 5 can comprise device generated raw input data 21 and preprocessed input data 32.

The device comprises the FPGA 33, which provides *inter alia* the following functions:
2 registers after initialization once with SPP
3 validation with SPP
4 provide certified pre-processing according to requested input type

The FPGA 33 further comprises an ADIC allowed and quality input data quality filter gate 6.

On the FPGA 33, the following units interact: an access control unit 7 (allowed to use the selection gate), a data class and quality filter unit 8 (also as quality selection gate), and a hardware security gate 9, which acts as a security gate and provides hardware security of FGPA deployed to 25. The outputs of these three units are AND-combined in the AND gate 30. The output of the AND gate 30 is passed to a decision unit 29 which decides on selector training. If the decision of the decision unit 29 is no, then in unit 17 a ML model is applied. Otherwise, a training accelerator / transformer 12 is used. Data is fed from the quality filter gate 6 via connections 13 to the accelerator / transformer 12 and from there to the output 14 for local SL training. The AI/ML accelerator 28 further comprises the training accelerator 27, which can e.g. comprise a GPU. The output of the AND gate 30 and further information is logged in the logging unit 10, which comprises swarm a logging / tracks dataset, comprising e.g. metadata, owner and hashed ID.

The FPGA preferably also comprises a unit 15 to store the swarm learning result classification by a practitioner.

Via a connection 16 information can be exchanged between the data directory 5 and the swarm learning result 15 by the practitioner.

Unit 11 provides a swarm/contractual agreement, which is based on an identity 21.

The device is implemented on an FPGA. Providing the device implemented on the FPGA results in the following advantages:
- The required local control over the data flow is better achieved.
- Hardware connected implementation is realized.
- Complexity of configuring a swarm learning node is contained.
- Performance can be locally optimized due to the flexibility provided by FPGA, for example by implementing specific performance optimized software.

Further, by implementing the device on FPGA, the device provides a secure hardware implementation of a node.

Fig. 1 shows that all relevant components of the swarm learning device are implemented on the FPGA. However, in other embodiments, only the access control unit and the quality filter unit, i.e., the core components that make sure that unauthorized access and deterioration of quality is prevented, are implemented on the FPGA. In this way, it is ensured that the core components are securely implemented and protected against tampering by third parties. Preferably, also the hardware security gates is implemented on the FPGA. In alternative embodiments, the hardware security gate could be implemented on a dedicated secure hardware component outside the FPGA.

The quality filter unit can be configured to filter data based on predetermined quality filter criteria. These predetermined quality filter criteria can comprise pre-defined rules that allow to filter out data of obvious low quality. The quality filter criteria can be adapted to specific classes of data.

An example might be transcriptome data generated by sequencing technologies. Here the quality metrics the filter would be using to determine, whether data could be used or not, would e.g. include, a certain sequencing depth per sample, e.g. 30 million reads, a certain quality score of the primary sequencing, e.g. a value of 40, as known in the field, a certain alignment level, for example 80% of all reads, as such value might be agreed upon in the field to be judged as a sample data of high quality. Another quality measure within the quality metrics might be a certain number of genes being minimally recognized within the data, e.g. more than 12,000 in any given and included blood sample. Yet another quality criteria might be a maximum deviation of the overall expression values of any given sample from the mean of all data being part of a local dataset. Overall, quality criteria for transcriptome analysis, as they are established in the field could be utilized as a quality metrics by the quality unit. In addition to standards in the field, the quality unit can, however, include any Swarm Learning network specific additional quality criteria that go beyond the current knowledge of the field

Another example might be fluorescence activated cell sorting analysis, e.g. used in leukemia diagnostics. A minimum quality metrics requirement might be the naming of all features being collected for a biological sample being included locally into the dataset being prepared for swarm learning. Another quality criteria might be a certain level of the fluorescence signal for each of the measured and included parameters, as they are defined in the field. Yet another criteria might be positivity for known measurements derived from the biological sample included in the dataset, for example a signal for positivity of CD₃ in blood samples, with CD₃ being a cell surface marker known in the field to be expressed by a certain type of immune cells in blood samples. Overall, quality criteria for FACS analysis, as they are established in the field could be utilized as a quality metrics by the quality unit. In addition to standards in the field, the quality unit can, however, include any Swarm Learning network specific additional quality criteria that go beyond the current knowledge of the field.

Further examples would come from data categories as they are defined above (Imaging data (e.g. x-ray, CT-scan, NMR, ultrasound, histopathology, etc.), Omics data (e.g. transcriptomics, genomics, epigenomics, proteomics, lipidomics, metabolomics, etc.), Clinical laboratory data, Wearable derived data, App-derived data, Video derived data (e.g. 3D gait pattern analysis), Dynamic wave data (e.g. ECG, EEG, etc.)), but not limited to these data categories.

Further the quality unit may make directly use of internationally agree upon quality metrics for each of these data categories and such process could be further automated to bake these quality metrics available to all Swarm Learning network members

Preferably, the device is for example a Xilinx Alveo Accelerator, wherein the FPGA may be configured to integrate and/or combine one or more application onto the accelerator and/or use the accelerator card to improve the performance of the FPGA. Preferably, the external accelerator card may be implemented in a qualified and certified server hardware located at the data-source of the data, for example in a hospital, in a doctor's office and/or in a laboratory. Preferably, the FPGA may also be implemented in such server. Preferably, the hardware security gate may inherit the security standard on the server, for example through loading the security functions on the server hardware and/or the external accelerator card onto the FPGA. Standard FPGAs are compatible for standard servers. Implementing the device for secure swarm learning on an existing server and/or using an existing accelerator reduces the complexity and cost of developing and deploying the FPGA.

Preferably, the device is configured to be part of a swarm learning network. Preferably, the swarm learning network may comprise a plurality of swarm devices, and the plurality of swarm devices may be orchestrated by a platform. Preferably, the FPGA is configured to load one or more applications from the platform. Preferably, the one or more applications are used for conducting a swarm learning processing and/or manage the relation between the device and the platform. Preferably, one or more applications for conducting a swarm learning processing may comprise a function for preprocessing data, a function for selecting data for swarm learning and/or a function for calculating the selected data for swarm learning. Preferably, one or more applications for the management of relation between the device and platform comprise a registration function, a validation function, a function for electing a leader of the swarm community, a function for logging and sharing information related to the swarm learning and/or a function for reporting an error. Swarm community herein can refer to the plurality of network devices interacting for decentralized machine learning. Depending on the requirement for calculation efficiency and security, one or more of the above-mentioned applications may be stored on the FPGA locally, while the rest are stored in the platform. In a preferred embodiment, the one or more applications stored in the platform may be data and/or model dependent and may be only loaded on a trusted device. This minimizes the exposure of critical information on an individual FPGA, and thus reduces the cost of such FPGA production, increases the safety on individual FPGA and improves the swarm learning network integrity.

The device for secure swarm learning comprises a registration unit 2 for registration to the platform. The registration unit 2 may be configured to store an identifier of the device. Preferably, the registration of the respective identifiers takes place in the platform. The device may consume a token of an implementation of a policy for the access. The identity lifecycle may take place in the platform. Depending on the agreed rules in the swarm community, the authorization for access takes place.

Preferably, the registration unit 2 may be configured to retrieve the identifier of the device upon registration on an initial boot. Preferably, the identifier of the device may be retrieved from the platform. Preferably, the identifier of the device may be generated and/or encrypted by the platform and/or the remote swarm device. Optionally, the registration unit 2 itself is configured to generate and/or encrypt the identifier of other remote swarm devices, preferably when the device is elected as a leader in a swarm community. Preferably, the identifier of the device may be intrinsic and generated locally on the device and not retrieved from the platform or the remote swarm device. The access control unit 7 may comprise a physical unclonable function, PUF, to generate the identifier of the device. The implementation on FPGA facilitates the use of PUF which provides a secured generation of the FPGA's identifier.

Preferably, the registration of the respective identifiers in the platform is also performed using components on the FPGA.

The device comprises a pre-processing unit 4 for deploying certified pre-processing to the data. Preferably, the data may be of a specific input type and or a specific data class. Preferably, if the device is a certified device, for example due to a successful initial boot or through a successful hardware validation, the pre-processing unit 4 may be configured to pre-process the data, before they are stored in a data directory 5. Preferably, the pre-processing unit 4 maybe configured to pre-process the data according to the data structure in an external agreement unit in the platform, in particular to generate metadata based on the information retrieved from a smart contract, wherein the metadata is stored in the descriptor of the data. In an alternative embodiment, the metadata is asserted locally by the owner. Preferably, the metadata may comprise one or more of the following information (data lineage):
i. a data source directory for the data class, (for example in the format: //host/mount/directory)
ii. a data format of the data class (for example in the format: data class: NMR, format: DICOM, version: {version})
iii. an identity of a data owner, an identity of a local data custodian, and/or an identity of source system (for example ELIXIR, eidas-id: e-id)
iv. a classification of the dataset for private data (for example whether the data are classified as personally identifiable information, PII, exemplary format: PII: false)

Preferably, the pre-processing unit 4 is configured to retrieve a pointer of a pre-processing pipeline from one or more preregistered pre-processing pipelines from the smart data based on the class of the data, wherein the pre-processing pipeline is implemented to pre-process the data. Preferably, the one or more preregistered pre-processing pipelines are stored in the platform. Preferably, the pre-processing may be computed on general compute or on an accelerator for better performance and/or for fulfilling different computing power requirements. In an alternative embodiment, the device may respond with the pointer to the pre-processing pipeline to be executed locally on the data and triggers the local execution of the pipeline. A pre-processing pipeline according to the embodiment may comprise: sequencing (fastq), alignment (bam), Count matrix (tab-delimited file) etc. but is not limited to these data formats.

Preferably, the FPGA may comprise accelerator configured to optimally pre-process the data. Preferably, the pre-processing is conducted outside the FPGA to reduce the risk where the attacker acquires the pre-processing information while attacking the FPGA and use it to attack the quality filter unit 8. Implementing the pre-processing unit 4 outside the FPGA increases the security of the device and the swarm learning environment. The increased security may be at a cost of reducing the efficiency.

The device is connected to a data directory 5 for storing the data for the swarm learning. Preferably, the data directory may be a highly secured database of the data owner and connected to the FPGA. In such an embodiment, the data directory may be external to the FPGA, the connection between the FPGA and the data directory 5 may be highly secured. For example, the data directory may appear read-only to the FPGA to deny modification from the FPGA. Preferably, the device may comprise a data scan unit for scanning data on the data directory. The data stored in the data directory comprise a descriptor to store the metadata of the data. The data for the swarm learning based multi-modal training and/or swarm learning based MDPT may comprise, but are not restricted to, one or more of the following data classes:
- Clinical data / EHR-Data (based on OHDSI)
- Imaging data (e.g. x-ray, CT-scan, NMR, ultrasound, histopathology, etc.)
- Omics data (e.g. transcriptomics, genomics, epigenomics, proteomics, lipidomics, metabolomics, etc.)
- Clinical laboratory data
- Wearable derived data
- App-derived data
- Video derived data (e.g. 3D gait pattern analysis)
- Dynamic wave data (e.g. ECG, EEG, etc.)

The device preferably comprises a quality filter gate 6 for filtering pre-processed input data. Preferably, the quality filter gate is just an interface, wherein the feeding of data from the data directory 5 through the quality filter gate 6 to the FPGA is controlled through the quality filter unit 8. In an alternative embodiment, the quality filter gate 6 may be a component configured to intrinsically store one or more data selection criteria, wherein the criteria of the quality filter gate 6 and the criteria retrieved by the quality filter unit 8 should be both fulfilled while selecting data to elevate the security standard of data selection, hence better protecting the data. Preferably, one or more functionalities of the quality filter unit 8 which are not directly related to the external agreement unit can be implemented in the quality filter gate 6. For example, the quality filter gate 6 can be configured to initiate a data request, initiate a data scan of data in the data directory 5 and/or conduct an evaluation of data retrieved from the data directory 5 based on one or more criteria retrieved by the quality filter unit 8 and/or one or more criteria stored in the quality filter gate 6. Preferably, such one or more functionalities can be store in the platform and be loaded after an initial boot. This reduces the configurations required to be stored locally, hence reducing the risk of attack on such configurations.

The device may comprise an access control unit 7 for controlling access between the platform and the device while employing a training and/or inference processing. Preferably, the access control unit 7 may be configured to initiate a registration to register the device to the platform.

The access control unit 7 may be configured to notify the registration unit 2 to register the device to the platform at an initial boot of the device. Preferably, the registration unit may be configured to register with the identifier of the device. Preferably of the registration, the registration unit 2 is configured to retrieve its own device identifier from the platform. The relationship between the data owner and the model owner and the corresponding data responsibility is initialized during this step. This facilitates an identity verification of the device to the platform, ensuring a secured swarm learning environment. Further, the relation between the node and the platform upon registration is determined by the access control unit 7. For example, the access control unit may be configured to determine whether the node is elected as a leader.

Preferably, the access control unit is configured to control the access to the FPGA for training as well as for inference. Preferably, the access may be controlled by attestation of access right(s) of one or more identities involved in the process. The one or more identities may comprise an identity of the device, an identity of the model, an identity of the data given access to, an identity of the owner of the device, an identity of the owner, an identity of the model and/or an identity of the owner of the data. Preferably, the one or more above mentioned identities may be controlled by the platform. Preferably, the one or more above mentioned identities may be retrieved from the data structure. Preferably, the access control may be configured to check the data against personal information.

Preferably, the access control unit 7 may be configured to periodically send the platform a request for status confirmation to periodically confirm a registration status of the device. Preferably, if the status confirmation is not received by the device or this identifier of the device is not registered in the platform, the access control unit 7 may be configured to reboot the device. Through controlling the registration status of the device in the platform, the persistence of device in the community is increased. The access control unit 7 is able to certify the device implemented on a FPGA that is needed by each node to participate in a decentralized learning of a particular AI algorithm.

The device further comprises a quality filter unit 8. The quality filter unit is connected to an external agreement unit, wherein the external agreement unit is configured to store a legal agreement, for example a swarm contractual agreement, through a certain data structure called a smart contract, wherein the smart contract may be derived from the attributes defined in a legal contract. Preferably the smart contract is implemented in the platform. The legal contract may be closed between the training parties for conducting a training. The legal contract may comprise an agreement of usage of certain data. In this embodiment, the quality filter unit is configured to retrieve from the smart contract one or more criteria and/or functions for filtering data for swarm learning. The one or more functions may comprise authorization for the quality filter unit 8 to gain access to certain data of a certain data class in the data directory 5. The one or more functions may further comprise a de-identification function of the data. The one or more functions may further comprise biostatistical testing in the case of a MDPT. The one or more criteria may comprise a minimum security requirement for a data to participate in the swarm training processing.

Preferably, when the device needs to retrieve data from the data directory 5, for example for feeding data for a training and/or an inference upon corresponding trigger, the quality filter unit 8 is configured to scan through the data directory 5 for retrieving new data/data sets.

In this embodiment, the quality filter unit 8 is configured to evaluate the metadata stored in local descriptors of the data according to the one or more criteria. The evaluation may comprise the evaluation on data lineage of the data source and/or the data ownership of the data. The quality filter unit is configured to generate quality metrics of the data based on the metadata of the data. Preferably, the quality metric may be asserted locally by the owner.

Preferably, the quality filter unit is configured to check data quality based on metadata and/or through the quality metric. In a further example, when the data quality fails to meet a predefined requirement, an anomaly may be detected and reported, and the functions of the device may be disabled to ensure the safety of other nodes. Preferably, the quality metric is sent to the platform for version control. An evaluation of the selected data and/or a quality metric may further provide a good overview of what the input data looks like and reduces the complexity of prototyping new training models.

Preferably, certain criteria maybe stored on the device before an initial boot. Preferably, such criteria may comprise a criterium which does not reveal the data or model specific information but may only be stored to elevate the security standard. For example, the criteria may relate to the de-identification of one or more sets of data. For example, the quality filter unit can be configured that if the quality filter unit cannot retrieve a de-identification function from the data structure, and a certain data set is classified as PII data, such data may be excluded from the swarm learning. This increases the intrinsic security of the FPGA while not increasing the hazard on the data or trained model, ensuring the right and property of data owner and/or model owner. Preferably, such criteria may be loaded on the FPGA after an initial boot.

Implementing the quality filter unit on the FPGA facilitates locally providing data to the FPGA, the selection of the provided date for qualified quality data, and the use of the selected data to the training (according to original combination of the device and a RWIC). The training data can be processed in a way to ensure production of high-quality outcome data from a decentralized learning process. Further, implementing a quality filter unit 8 instead of storing all selection criteria locally facilitates a dynamic and adaptable data filtering, which can be specific to the individual swam learning processing.

Preferably, the quality filter unit 8 retrieves selection criteria and/or functions that correspond to the pre-processing of data. Preferably, the quality metrics, selection criteria, the corresponding pre-processing and/or the resulting metadata of the data maybe dependent on the specific domain and are adaptable to each domain specifics. In particular, the data can be pre-processed so that they can be selected by certain criteria. On the other hand, the selection criteria can ensure that only data that have been pre-processed properly can be selected. Through combining the quality filter unit 8 and pre-processing unit 4 corresponding to each other, the device delivers a certain abstraction and ease of adaptability, therefore the device is generalized and a wider range of application is achieved.

Further, implementing both access control unit 7 and the quality filter unit 8 on the FPGA facilitates the use of the selected data to the deployment in combination with the native acceleration of the FPGA card for faster calculation at a reduced power consumption footprint in a trusted and secured environment. By implementing an access control unit and a quality filter unit, the needed trust of the user in the training platform and the machine learning in general can be ensured.

The device further comprises a hardware security gate 9. The hardware security gate is configured to check the hardware integrity of the device to establish a root of trust of the device. The hardware security gate 9 may be configured to check the hardware integrity by checking the hardware integrity of the server or another propriety device (e.g. iLO) after the server or the propriety device is booted. This ensures that the device is only run in a qualified environment. For example, the server may comprise a trusted platform module (TPM) to maintain the server integrity and to provide the hardware security gate 9 with the hardware integrity information of the server. The hardware security gate 9 may be configured to decide based on the hardware integrity information whether a hardware root of trust of the device is valid. In an alternative embodiment, the device is not implemented on a server. The hardware security gate 9 may check the hardware integrity of the FPGA itself. The FPGA may comprise a TPM itself, for example encapsulated in an IP core.

In this embodiment, if the security gate 9 decides that the hardware root of trust of the device is not valid, for example, because the hardware integrity does not fulfil a pre-set threshold, the hardware security gate 9 may be configured to send the notification to the platform and/or other nodes, and/or disable one or more local functions. Preferably, this notification must not be state-safe and may be handled informative. On the other hand, if the security gate 9 decides that the hardware root of trust of the device is valid, for example, because the hardware integrity fulfils a pre-set threshold, the device is validated for participating in the followed swarm learning processing. This ensures that the security of the swarm learning network is ensured even if a single device is not trusted.

Preferably, the hardware integrity may be checked once every time the device and/or the server is booted for participating in a swarm learning processing. In an alternative embodiment, the hardware integrity may be monitored during a swarm learning processing. For example, the hardware security gate 9 may be configured to monitor a working condition of the device by monitoring physical attributes of the FPGA, preferably through a differential power analysis, DPA, wherein the hardware security gate is configured to disable one or more applications loaded on the FPGA if an anomaly is detected. This way, the hardware security of the FPGA is further improved. Implementing the hardware security gate 9 on the FPGA sets the base of the trustworthiness of the FPGA itself within a trusted server for the calculation. This further improves an overall integrity of the swarm community.

The device further comprises a swarm logging unit 10 for logging information related to the swarm learning processing. The logging unit 10 is configured to log information related to a swarm learning processing wherein the information related to the swarm learning processing comprises one or more of the following:
- an identification of the data provided for swarm learning,
- a pre-processing instance ID for the pre-processing conducted on the data provided for swarm learning,
- a hardware identifier of the FPGA,
- an agreement identifier of the smart contract, and
- an evaluation of the data provided for swarm learning by the quality metric unit 6.

The logging may be performed after an instruction for conducting the training processing or an instruction for conducting the inference processing is received. The logged information may be copied and/or sent to the platform or other remote swarm devices. Logging such information can increase the persistence and traceability, which facilitates a better version control.

The device further comprises a real world intake connector (RWIC). The RWIC is implemented on the FPGA and is configured to retrieve a classification of the practitioner and feeds this information back into the training lifecycle.

The function of a RWIC is explained in the following example of conducting a MDPT. When a practitioner applies a MDPT, he or she either confirms the prediction or rejects the prediction of the individual test. In case the practitioner acts as a qualified user to conduct a training processing in the swarm learning community, the individual test and the practitioner's classification is added to the training set for the next iteration of training processing. In case the practitioner acts as a qualified user to conduct an inference processing in the swarm learning community, the practitioner's classification is fed back into the monitoring system of the platform for evaluation of the performance of the individual test. Test results from each individual MDPT are aggregated centrally in the platform. If real-world test results deliver indication, that there is a lower performance as of respective threshold, a trigger is given to the platform product manager to decide for a retraining. If the re-training is successful with better performance, the RWIC reviews and deploys a new version of the model. Or the re-training may lead to lower performance with the same.

Preferably, the RWIC may be certified through the access control unit. By re-integration of user qualified outcome data into a new training session, the RWIC ensures continuous quality improvement of the AI algorithm's results.

It should be noted that although a conventional FPGA facilitates an easy modification, for example through a Hardware Description Language (HDL), the design of a swarm learning network may lead to the fact that a FPGA modified by an unauthorized attacker will not affect the rest of the community. In a swarm learning community, the platform signals to the device the availability of a new certified software version to be implemented on the FPGA. The device informs the platform which certified software version was used on the present FPGA. If the platform detects a deviation from the approved certified software functions, for example, through out-of-date version or through malicious modification using HDL, it will return an error. The device will therefore not be trusted. The access control unit 7 in the device may request a reinitialization of the local software from the platform. A reinitialization is realized through a certified algorithm, which should be provided by a certified registry within the platform. The algorithm is signed, so that the algorithm can reinitialize the FPGA of the device in a signed state. As soon as the FPGA is tampered, the signature expires, so that the device is no longer accepted in the swarm community. Further, the FPGA can be implemented in a secured server to deny both physical and digital access from a malicious attacker, which can further improve the security.

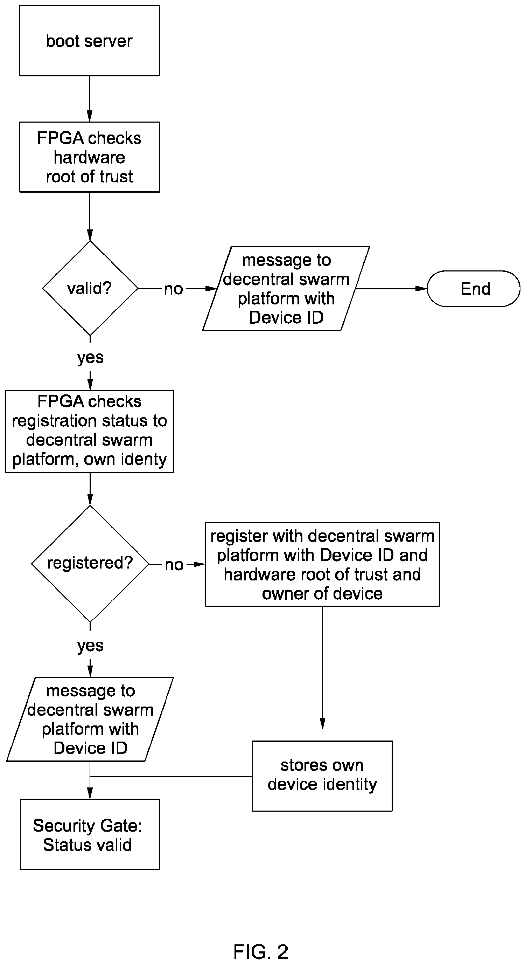

FIG. 2 depicts a schematic illustration of a sequence of steps and a flow diagram, for a method of checking the hardware status of the device for swarm learning processing according to an exemplary embodiment of the invention. The swarm learning processing may comprise a training processing for using the pre-stored data to train a swarm machine learning model, or an inference processing for using a previously trained swarm machine learning model to make a prediction, such as MDPT. For both training and inference the same method of checking the hardware status may be implemented.

In a first step, the server or a proprietary device (e.g. iLO), where the device is implemented is booted, the booting of the server triggers the device to perform one or more of the following steps. In an alternative embodiment, the device is not implemented on a server or another proprietary device (e.g. iLO), and the device may be booted independently in the first step.

In a second step, which is performed after the boot of the server and/or device, the hardware security gate 9 checks the hardware integrity to establish a root of trust. The hardware security gate 9 may check the hardware integrity by checking the hardware integrity of the server or another propriety device (e.g. iLO). This ensures that the device is only run in a qualified environment. For example, the server may comprise a trusted platform module (TMP) to secure the server and to provide the hardware security gate 9 with the hardware integrity information of the server. In an alternative embodiment, the device is not implemented on a server. The hardware security gate 9 may check the hardware integrity of the FPGA itself. The FPGA may comprise a TMP itself, for example encapsulated in an IP core.

In a third step, the hardware security gate 9 decides based on the hardware integrity information, for example, the hardware integrity information generated by the TMP of the server and/or the TMP of the FPGA, whether a hardware root of trust of the device is valid.

If the security gate 9 decides that the hardware root of trust of the device is not valid, for example, because the hardware integrity does not fulfil a pre-set threshold, the process proceeds to a fourth step. In the fourth step, the hardware security gate 9 sends the notification to the platform and/or other swarm devices, and/or disables one or more local functions. In this case, the device is not validated and cannot participate in the following swarm learning processing, and the process ends after the fourth step. Preferably, this notification must not be state-safe and may be handled informative only. This ensures that the security of the swarm learning network is ensured even if a single device is not trusted.

If the security gate 9 decides that the hardware root of trust of the device is valid, for example, because the hardware integrity fulfils a preset threshold, the device is validated for participating in the followed swarm learning processing. In this case, the process proceeds to a fifth step.

In the fifth step, the access control unit 7 checks the registration status of the device to the platform. For example, the access control unit 7 may check whether the identifier of the device is registered in the platform for the swarm learning processing. As outlined above, the registration unit 2 may be configured to store the identifier of the device.

In a sixth step, the access control unit 7 decides based on the registration status of the platform whether the device is registered in the platform.

If the access control unit 7 decides that the device has not been registered in the platform, the process proceeds to a seventh step. In the seventh step, the access control unit 7 registers on the platform with the identifier of the device, the confirmation that the hardware root of trust of the device is established, and/or the identity of the device owner. Then the process proceeds to an eighth step.

In the eighth step, the access control unit 7 retrieves and stores the identity of the device in the swarm community. For example, the identity of the device may reflect whether the device has been elected as a leader for a swarm training, which swarm training processing the device is going to participate, and/or which modal and/or data class is involved in the following swarm training processing. Then, the access control unit 7 notifies the device and/or the platform that the hardware status of the device is valid, and the device is ready for participating in the following swarm learning processing.

In the sixth step, if the control unit 7 decides that the device has been registered in the platform, the process proceeds to a ninth step. In the ninth step, the access control unit 7 sends a message to the platform with the identifier of the device and notify the platform and/or the device that the hardware status of the device is valid, and/or the device is ready for participating in the following swarm learning processing.

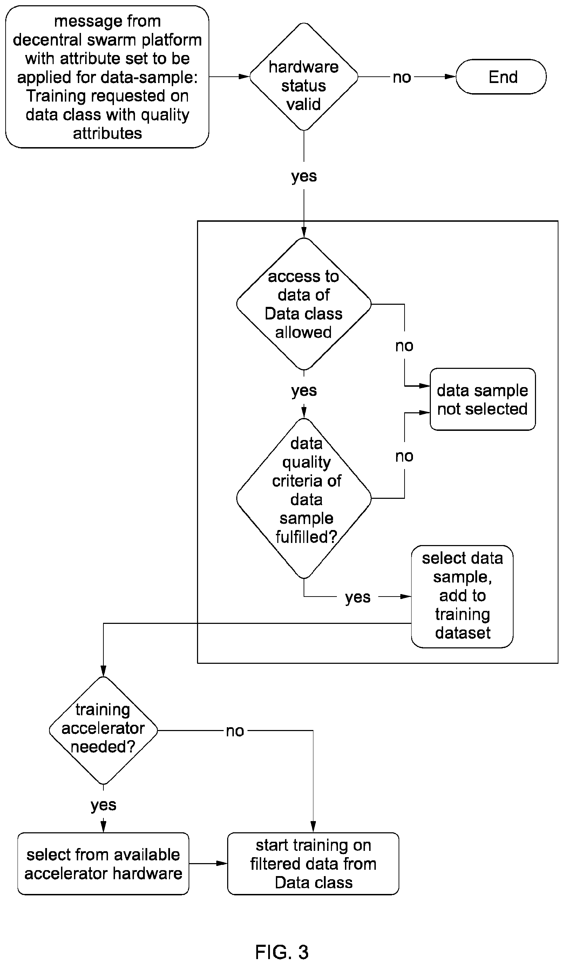

FIG. 3 depicts a flow chart of a sequence of steps for a method of conducting a training processing.

In a first step the access control unit 7 receives a message from the platform comprising an instruction for conducting a training processing. Preferably, the instruction for conducting a training processing may comprise attributes set to be applied for data-sampling, the data class involved in the training, the quality attributes related to the data class, and/or an indicator of a smart contract. Preferably, the attribute set to be applied for data-sampling, the data class involved in the training and/or the quality attributes related to the data class can be retrieved from the smart contract. In an alternative embodiment, the instruction for conducting a training processing is received locally, for example, by the local practitioner in a hospital.

The process proceeds to a second step where the access control unit 7 checks whether the hardware status is valid for participating in the training processing. The hardware status check may be conducted according to one of the embodiments of the method mentioned above. If the hardware status is not valid, for example because the hardware root of trust is not established, the process ends after the second step.

If the hardware status is valid, the process proceeds to a third step. In the third step, the quality filter unit 8 retrieves one or more criteria and/or functions from the smart contract. The one or more functions may comprise authorization for the quality filter unit 8 to gain access to certain data of certain data classes in the data directory 5. Preferably, the criteria from the smart contract may comprise: data quality, pre-processing requirements, data class(es) and or constraints. In the third step, the quality filter unit 8 scans through the data directory 5 for selecting data for the processing. While scanning, the quality filter unit 8 decides, based on the retrieved functions from the smart contract, whether the device has an access to data of certain data classes stored in the data directory 5. If the quality filter unit 8 decides that the device does not have access to data of certain data classes, the corresponding data will not be selected for the processing. If the quality filter unit 8 decides that the device has access to data of certain data classes, the process proceeds to a fourth step.

In the fourth step, the quality filter unit 8 evaluates the metadata stored in local descriptors of the data according to the one or more criteria while scanning through the data directory. The evaluation may comprise the evaluation on data lineage of the data source and/or the data ownership of the data. In the fourth step, the quality filter unit 8 decides, based on the evaluation, whether the data fulfils the one or more criteria. If the quality filter unit 8 decides that the data does not fulfil one or more of the criteria, the corresponding data will not be selected for the processing. If the quality filter unit 8 decides that the data fulfils one or more of the criteria, the process proceeds to a fifth step.

In the fifth step, the selected data are added to a training dataset for the training processing. In an alternative embodiment, the fifth step further comprises de-identification of the data. Preferably, data with a sensitive data flag may not be selected at the third or fourth step unless a de-identification of the data is retrieved from the smart contract. A de-identification of the data is a process, where after such process, the identity of the data is no longer recognizable. In an alternative embodiment, the fifth step further comprises an evaluation of the selected data, wherein the evaluation of the selected data maybe logged for version control. Preferably of the evaluation of the selected data, the quality filter unit is configured to generate quality metrics of the data based on the metadata of the data. Preferably, the quality metric may be asserted locally by the owner.

In the alternative embodiment where the instruction for conducting a training processing is received locally, for example, by a local practitioner in a hospital, instead of the above mentioned third step to fifth step, the method comprises: retrieving an output of a local swarm learning training, providing the classification of the practitioner's final diagnosis with a confidence level, and adding by the RWIC the practitioner's classification with the practitioner's identity to the metadata of the dataset. The dataset may be flagged to be a valid training dataset. The RWIC may call the platform with the information about the newly added classified dataset.

The process proceeds to a sixth step, where the quality filter unit 8 retrieves from the smart contract which training model and a training function corresponding to the selected data for the training processing should be selected. Preferably, the training model and/or training function is selected from a model registry. The quality filter unit 8 further decides, based on the training model and/or the data class of the selected data whether a training accelerator is needed. If the quality filter unit 8 decides that a training accelerator is needed, the corresponding training accelerator is selected from available accelerator hardware. Preferably, the accelerator hardware comprises an external accelerator card. In an alternative embodiment, that accelerator is implemented on the FPGA.

If the quality filter unit 8 decides that no training accelerator is needed, or after the training accelerator is selected, the training of the model using selected data starts. Preferably, the device signals a swarm learning library that the device is available for training. The training of the model may comprise any method in a conventional training epoch of a swarm learning, including multi-modality multiple data classes calls of the swam learning.

Preferably, the method further comprises a step, where the logging unit 11 logs the dataset package (Data lineage tracking, data owner, data provider, certified pre-processing instance ID, Identifiers of used hardware security check, identifier of contract, identifier of agreement, etc.).

Preferably, the method further comprises the device notifying the platform about the dataset used and the device responding with the statistics about the dataset, for example with the statistics about the data classes.

This method facilitates providing high quality training dataset to a swarm training processing, increasing the precision of the trained model.

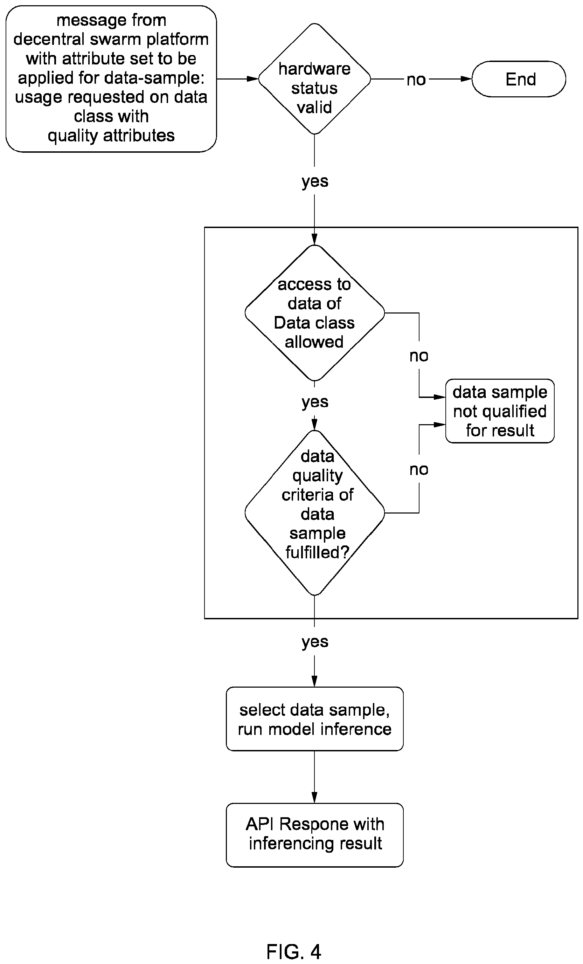

FIG. 4 depicts a schematic illustration of a sequence of steps and a flow diagram, for a method of conducting an inference processing according to an exemplary embodiment of the invention.

In a first step the access control unit 7 receives a message from the platform comprising an instruction for conducting an inference processing, for example for conducting a MDPT prognosis. Preferably, the instruction for conducting an inference processing may comprise an attribute set to be applied for data-sampling, the data class involved in the inference, the quality attributes related to the data class, and/or indicator of a smart contract. Preferably, the attribute set to be applied for data-sampling, the data class involved in the inference and/or the quality attributes related to the data class can be retrieved from the smart contract. In an alternative embodiment, the instruction for conducting an inference processing is received locally, for example, by the local practitioner in a hospital.

The process proceeds to a second step where the access control unit 7 checks whether the hardware status is valid for participating in the inference processing. The hardware status check of the device may be conducted according to one of the embodiments of the method mentioned above. If the hardware status is not valid, for example because the hardware root of trust is not established, the process ends after the second step.

If the hardware status is valid, the process proceeds to a third step. In the third step, the quality filter unit 8 retrieves one or more criteria and/or functions from the smart contract. The one or more functions may comprise authorization for the quality filter unit 8 to gain access to certain data of certain data classes in the data directory 5. Preferably, the criteria from the smart contract may further comprise data quality, pre-processing requirements, data class(es) and/or constraints. In the third step, the quality filter unit 8 scans through the data directory 5 for selecting data for the processing. While scanning, the quality filter unit 8 decides, based on the retrieved functions from the smart contract, whether the device has access to data of a certain data classes stored in the data directory 5. If the quality filter unit 8 decides that the device does not have access to data of certain data classes, the corresponding data will not be selected for the processing. If the quality filter unit 8 decides that the device has access to data of certain data classes, the process proceeds to a fourth step.

In the fourth step, the quality filter unit 8 evaluates the metadata stored in local descriptors of the data according to the one or more criteria while scanning through the data directory. The evaluation may comprise the evaluation on data lineage of the data source and/or the data ownership of the data. In the fourth step, the quality filter unit 8 decides, based on the evaluation, whether the data fulfils the one or more criteria. If the quality filter unit 8 decides that the data does not fulfil one or more of the criteria, the corresponding data will not be selected for the processing. If the quality filter unit 8 decides that the data fulfils one or more of the criteria, the process proceeds to a fifth step. In an alternative embodiment, the data for inference is not selected from the data directory 5, but input by the user through an input unit. In this alternative embodiment, the input data may be pre-processed by the pre-processing unit 4 and be evaluated. Decision may be made based on the criteria, whether the data can be used for inference. The details of a pre-processing by the pre-processing unit 4 may be similar to the pre-processing described above.

In the fifth step, the quality filter unit 8 is configured to retrieve from the definition within the smart contract an inference model and an inference function corresponding to the selected data for the inference processing. Then the inference of the data starts with the selected inference model.

## Claims

1. A device for decentralized machine learning, the device comprising:
- an access control unit (7) for controlling an access of a remote device to the device,
- a hardware security gate (9) for checking a hardware integrity of the device, and
- a quality filter unit (8) for filtering data provided for decentralized machine learning,
wherein the access control unit (7) and the quality filter unit (8) are implemented on an FPGA.

2. The device of claim 1, wherein the access control unit (7), the hardware security gate (9), and the quality filter unit (8) are encapsulated in a hard IP core of the FPGA.

3. The device of claim 1 or 2,
wherein the access control unit (7) comprises a physical unclonable function, PUF, to generate an identifier of the FPGA, wherein the device is configured to use the identifier as an identity verification between the device and a remote device.

4. The device of one of the preceding claims,
wherein the hardware security gate (9) is configured to monitor a working condition of the device by monitoring physical attributes of the FPGA, preferably through a differential power analysis, DPA, wherein the hardware security gate is configured to disable an application loaded on the FPGA if an anomaly is detected.

5. The device of one of the preceding claims, wherein the quality filter unit (8) is connected to an agreement unit (11) that is external to the FPGA,
wherein the external agreement unit (11) is configured to define and store a smart contract,
wherein the quality filter unit (8) is configured to retrieve one or more criteria and/or functions from the smart contract, wherein the one or more criteria and/or functions are used to filter the data provided for decentralized machine learning.

6. The device of claim 5, further comprising:
a pre-processing unit (4) for pre-processing the data provided for decentralized machine learning according to the smart contract, in particular to generate metadata, wherein the metadata are stored in a descriptor of the data provided for decentralized machine learning, and the pre-processed data provided for decentralized machine learning are stored in an external directory (5).

7. The device of claim 6,
wherein the pre-processing unit (4) is configured to retrieve a pointer of a pre-processing pipeline from one or more preregistered pre-processing pipelines from the smart contract based on a class of the data provided for decentralized machine learning.

8. The device of claim 6 or 7,
wherein the device is configured such that when a set of data provided for decentralized machine learning comprises one or more data that are classified as sensitive data, in particular using a sensitive data flag, and the quality filter unit (8) cannot retrieve such flag as requested by the smart contract, this set of data is excluded from decentralized machine learning.

9. The device of any one of claims 6 to 8, further comprising:
a quality metric unit (6) for generating one or more quality metrics based on the metadata of the data provided for decentralized machine learning.

10. The device of any one of claims 6 to 8, wherein the device further comprises a real-world intake connector, configured to receive a real world result corresponding to the input, wherein the real-world result is stored with the corresponding input in an external directory (5), wherein in particular the storing is performed after a pre-processing conducted by the pre-processing unit (4).

11. A method for a device to perform secure decentralized machine learning, wherein the method comprises:
checking, by a hardware security gate (9), a hardware integrity of the device by a hardware security gate;
controlling, by an access control unit (7), an access of a remote device to the device; and
filtering, by a quality filter unit (8), data provided for machine learning,
wherein the access control unit (7) and the quality filter unit (8) are implemented on an FPGA.

12. The method of claim 11,
wherein the controlling the access of a remote device to the device by the access control unit (7) comprises:
checking a registration status of the device on a platform;
receiving an instruction from the platform; and
attesting an access right of an identity of the device based on the instruction.

13. The method of claim 12,
wherein the instruction from the platform is an instruction to conduct an inference processing, and the method further comprises:
entering an input for the inference processing;
retrieving a trained machine learning model from the platform according to the input;
conducting the inference processing with the machine learning model;
entering the real-world inference result corresponding to the input; and
storing the input with the corresponding real-world inference result in a directory.

14. The method of one of claims 11 to 13, wherein prior to storing the data provided for decentralized machine learning in the directory, the method further comprises:
determining a class of the data provided for decentralized machine learning;
retrieving a pre-processing pipeline from the platform based on the class of the data provided for decentralized machine learning;
pre-processing the data provided for swarm learning using the pre-processing pipeline to generate metadata; and
storing the metadata in a descriptor of the data provided for decentralized machine learning.

15. A computer-readable storage medium storing program code, the program code comprising instructions that when executed by a processor carry out the method of one of claims 11 to 14.
